# EUROPEAN PATENT APPLICATION

(11) **EP 1 814 343 A1**
(43) Date of publication of application: **01.08.2007**
(21) Application number: 04822630.2
(22) Date of filing: 18.11.2004
(51) Int. Cl.: H04Q 7/36

(54) **MOBILE RADIO BASE STATION RADIO CHANNEL SETTING METHOD**

(71) Applicant: MITSUBISHI ELECTRIC CORPORATION, Chiyoda-ku Tokyo 100-8310 (JP)
(72) Inventor: MAEDA, Masaya, Mitsubishi Electric Corporation, Tokyo 1008310 (JP)
(74) Representative: Pfenning, Meinig & Partner GbR
(86) International application number: PCT/JP2004/017142
(87) International publication number: WO 2006/054341

(57) **Abstract**

To achieve a method of setting a radio channel of a mobile radio base-station that can be moved to an arbitrary position and used there to provide local and short-term services at home and within a specific object facility.
A mobile radio base-station includes an IP communication interface in addition to a radio resource control function, and can be moved. A plug-and-play server that manages a public radio base station for a mobile telephone network and a mobile radio base-station is located on an operator network that is connected to an IP communication network. The mobile radio base-station receives power on or reset operation, and notifies the plug-and-play server about position information of neighboring radio base stations. The plug-and-play server inquires a neighboring radio base station specified based on the notified position information about a setting state of radio channels, and obtains the setting state. The plug-and-play server then sets a radio channel of the mobile radio base-station by which the position information is notified, based on a setting state of a radio channel of a neighboring mobile radio base-station out of the obtained setting state of radio channels.

## Description

### TECHNICAL FIELD

The present invention relates to a method of setting a radio channel of a mobile radio base-station that is movable and used in a radio communication system established in a limited area or indoors.

### BACKGROUND ART

An indoor radio communication system employs a configuration in which a radio-wave reaching distance is limited from about a few meters to a few tens of meters by limiting transmission power and radio base stations are arranged in the entire indoor service area at intervals of a few meters and a few tens of meters to use assigned radio frequency resources effectively to the maximum extent possible. In this case, radio channels need to be set to avoid mutual interference between frequencies of channels of the radio base stations.

The method of assigning radio channels to radio base stations is broadly classified into two types. One is fixedly setting a frequency of a radio channel considering an assignment of radio channels to neighboring radio base stations and radio wave propagation at the time of establishing a radio base station (hereinafter, "fixed radio-channel setting"). The other is equally assigning a set of available frequencies to base stations in advance, and determining a frequency to be used in each radio base station at the time of activating the radio base station, at regular intervals, or at the time of communicating with a radio terminal to set a radio channel (hereinafter, "dynamic radio-channel setting").

According to the fixed radio-channel setting, an assigned frequency, transmission power, etc. are fixedly used. Therefore, the operation of radio base stations and the radio channel selection control during communication are facilitated. On the other hand, it is difficult to assign radio channels to radio base stations located every few meters to every tens of meters in such a manner as to avoid mutual interference. In addition, radio wave propagation characteristics change easily due to layout modification in an indoor environment, and communication becomes impossible depending on circumstances.

As explained above, because the fixed radio-channel setting cannot readily handle interference between radio channels of the same frequency, the dynamic radio-channel setting is preferable for the indoor radio communication system. A method of performing carrier sense each time radio communication is carried out to find an available frequency, and using this frequency is known as the dynamic radio-channel setting. This method is applied to a cordless telephone. However, because carrier sense needs to be performed each time radio communication is carried out, the control becomes complicated, and a delay occurs.

A method of autonomously setting a radio channel of a radio base station by collecting and acquiring information on radio channels used by neighboring radio base stations has been proposed as a radio-channel allocation method that is a hybrid method of the fixed radio-channel setting and the dynamic radio-channel setting (for example, Patent Documents 1 and 2).

For example, the Patent Document 1 discloses a technology in which radio channel information is exchanged between neighboring radio base stations, and each radio base station autonomously sets a radio channel based on the obtained radio channel information at the time the radio base station is established. The Patent Document 2 discloses a technology in which a management device is provided to consolidate the management of use state of radio channels of respective radio base stations to assign a radio channel to each radio base station.

Patent Document 1: Japanese Patent Application Laid-open No. H6-334597
Patent Document 2: Japanese Patent Application Laid-open No. H8-9447

### DISCLOSURE OF INVENTION

### PROBLEM TO BE SOLVED BY THE INVENTION

To install a personal radio base station at home to provide extension telephone or hotspot data communication service, for example, a radio channel needs to be set up not to interfere with a public radio base station and a personal radio base station used in adjacent areas. It is desirable that a personal radio base station be a mobile radio base-station location of which can be changed freely according to the layout of the house or position of the user. Therefore, a personal radio base station needs to be capable of autonomously or automatically setting a radio channel.

However, the conventional method of setting a radio channel of an indoor radio base station is based on the assumption that service provider installs many radio base stations having the same capacity and the same scale indoors to provide an indoor radio service. Therefore, it is difficult to change the location of a radio base station and install a personal radio base station without changing, for example, the setting of a radio channel of a public radio base station.

The present invention has been achieved in view of the above problems, and it is an object of the present invention to provide a method of setting a radio channel of a mobile radio base-station that is used while arbitrarily changing its location to provide a local and short-term service at home or in a specific target facility.

### MEANS FOR SOLVING PROBLEM

To achieve the object mentioned above, according to the present invention, a method of setting a radio channel of a mobile radio base-station that is applied to a radio communication system established in a limited area or indoors, the radio communication system including the mobile radio base-station that is movably installed, and includes an IP communication interface to access an IP communication network in addition to a radio resource control function, and a plug-and-play server that manages a public radio base station of a mobile telephone network and the mobile radio base-station and is located on an operator network connected to the IP communication network, includes a first step at which the mobile radio base-station, in which power is turned on or reset operation is performed, notifies the plug-and-play server about position information of a neighboring radio base station, and a second step at which the plug-and-play server inquires the neighboring radio base station specified based on the position information about radio-channel setting state to acquire the radio-channel setting state, and sets a radio channel of the mobile radio base-station that has notified the plug-and-play server of the position information by any one of frequency assignment and code assignment based on radio-channel setting state of a mobile radio base-station out of obtained radio-channel setting state of the neighboring radio base station.

According to the present invention, a plug-and-play server can set an optimal radio channel depending on the location of a mobile radio base-station without acquiring a positional relationship between mobile radio base-stations.

### EFFECT OF THE INVENTION

According to the present invention, it is possible to properly set a radio channel of a mobile radio base-station that is used while arbitrarily changing its location to provide a local and short-term service at home or in a specific target facility.

### BRIEF DESCRIPTION OF DRAWINGS

[Fig. 1] Fig. 1 is a conceptual diagram of an example of an entire configuration of a setting system to which is applied a method of setting a radio channel of a mobile radio base-station according to the present invention.
[Fig. 2] Fig. 2 is a conceptual diagram of a radio channel setting system for explaining a method of setting a radio channel of a mobile radio base-station according to a first embodiment of the present invention.
[Fig. 3] Fig. 3 is a flowchart for explaining a procedure in which a plug-and-play server shown in Fig. 2 sets a radio channel of a mobile radio base-station.
[Fig. 4] Fig. 4 is a table for explaining cell configurations of radio base stations shown in Fig. 2.
[Fig. 5] Fig. 5 a table for explaining radio-channel setting state in cells of radio base stations detected by the mobile radio base-station for which a radio channel is to be set.
[Fig. 6] Fig. 6 is a chart for explaining a power adjusting operation of the plug-and-play server shown in Fig. 2.
[Fig. 7] Fig. 7 is a schematic for explaining a result of power adjustment.
[Fig. 8] Fig. 8 is a conceptual diagram of a radio channel setting system for explaining a method of setting a radio channel of a mobile radio base-station according to a second embodiment of the present invention.
[Fig. 9] Fig. 9 is a conceptual diagram of a radio channel setting system for explaining a method of setting a radio channel of a mobile radio base-station according to a third embodiment of the present invention.

### EXPLANATIONS OF LETTERS OR NUMERALS

1a, 1b, 1c Limited area such as floors within building or venues in exhibition hall
2a, 2b, 2c, 22, 23 Home terminal (HT)
3a, 3b, 3c, 24, 25, 81, 82 Mobile radio base-station (BTS)
4a, 4b, 4c, 26, 90 Radio terminal (UE)
10, 11 ISP network
12 Internet
13 Operator network
14, 20 Plug-and-play server (PPS)
21 Public radio base station
27, 28, 29 Coverage area
71, 72, 73 Location of mobile radio base-station
74, 75, 76 Bisector between locations of mobile radio base-stations
77, 78, 79 Transmission-power adjustment area
85, 86, 87 Maximum reach range

### BEST MODE(S) FOR CARRYING OUT THE INVENTION

Exemplary embodiments of a method of setting a radio channel of a mobile radio base-station according to the present invention are explained below in detail with reference to the accompanying drawings.

### First embodiment

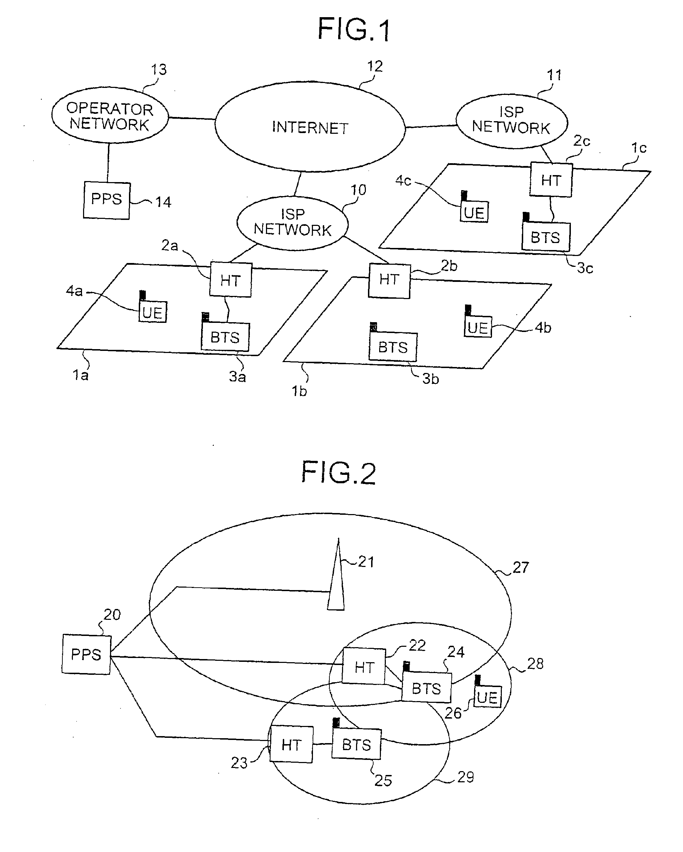

Fig. 1 is a conceptual diagram of an example of an entire configuration of a setting system to which is applied a method of setting a radio channel of a mobile radio base-station according to the present invention. In Fig. 1, limited areas 1a, 1b, and 1c denote floors within a building, or venues of an exhibition hall, for example. These rooms are partitioned with walls, or are geographically isolated. Home terminals (HT) 2a, 2b, and 2c, and mobile radio base-stations (BTS) 3a, 3b, and 3c are arranged in the limited areas 1a, 1b, and 1c, respectively. Radio terminals (UE) 4a, 4b, and 4c that are radio connected to the mobile radio base-stations (BTS) 3a, 3b, and 3c move along with the movement of a user, in the limited areas 1a, 1b, and 1c.

The home terminals 2a, 2b, and 2c provide Internet connections to users via backbones (FTTH, ADSL, CATV, etc.) through which ISPs (Internet service providers), to which the users subscribe to receive local and short-term services, provide Internet services in the limited areas 1a, 1b, and 1c.

In Fig. 1, two ISP networks 10 and 11 are shown as networks under the management of ISPs to which the users subscribe. The home terminals 2a and 2b are connected to the ISP network 10, and the home terminal 2c is connected to the ISP network 11.

The mobile radio base-stations 3a, 3b, and 3c are radio base stations that are personally used to provide local and short-term services in the limited areas 1a, 1b, and 1c, and these mobile radio base-stations can be movably installed instead of being fixed. The mobile radio base-stations 3a, 3b, and 3c are connected by wire or wireless to the home terminals 2a, 2b, and 2c, like personal computers not shown, and include IP communication interfaces to access the Internet 12 using the IP (Internet Protocol).

The mobile radio base-stations 3a, 3b, and 3c have a mechanism of autonomously controlling radio resources (such as a frequency and transmission power of a radio channel; a scrambling code and the like in the CDMA (Code Division Multiple Access) system. In the WCDMA (wide band CDMA) system, this radio resource control mechanism is called an RNC (Radio Network Controller). The WCDMA system is taken as an example of a wireless communication system to facilitate understanding of the invention.

The ISP networks 10 and 11 are connected to an operator network 13 that is managed by a communications carrier. In other words, the ISP networks 10 and 11 and the operator network 13 are connected to each other by the IP on the Internet 12.

According to the present invention, a plug-and-play server (PPS) 14 is located in the operator network 13. The plug-and-play server 14 is a server that operates and manages the mobile radio base-stations 3a, 3b, and 3c and a radio base station (hereinafter, "public radio base station") of a mobile telephone network ("W-CDMA system" in this case) not shown. In the present invention, the plug-and-play server 14 includes functions of setting radio channels of the mobile radio base-stations 3a, 3b, and 3c in the following various methods. Thus, the mobile radio base-stations 3a, 3b, and 3c can be arranged and used at arbitrary positions within the limited areas 1a, 1b, and 1c.

A method of setting a radio channel of a mobile radio base-station according to the first embodiment is explained below with reference to Figs. 2 to 7. Fig. 2 is a conceptual diagram of a radio channel setting system for explaining the method of setting a radio channel of the mobile radio base-station according to the first embodiment of the present invention.

Fig. 2 selectively depicts a configuration concerning the radio channel setting system out of the configuration shown in Fig. 1 using new reference numerals. In Fig. 2, a public radio base station 21 and home terminals (hereinafter, "HT") 22 and 23 are connected to a plug-and-play server (hereinafter, "PPS") 20 via a network as shown in Fig. 1. A mobile radio base-station (BTS) 24 is connected by wire or wireless to the HT 22. A mobile radio base-station (BTS) 25 is connected by wire or wireless to the HT 23. Reference numerals 27, 28, and 29 denote coverage areas of the public radio base station 21 and the mobile radio base-stations 24 and 25, respectively.

In the outdoor radio cellular communication system and the outdoor cordless telephone system, transmission power and installation positions of radio base stations are adjusted to overlap the coverage areas of the adjacent radio base stations to enable users to continue communications when the users move. However, one of the objects of the present invention is to provide a radio communication service as a hot spot to only users who are present in a limited space such as a home, a shop, and an exhibition hall. Therefore, ideally, overlapping of a coverage area of a public radio base station installed outdoors and a coverage area of a mobile radio base-station installed in a limited area such as indoors should be avoided.

However, some public radio base stations cover an area of a few hundred meters to a few tens of kilometers, and their waves often reach indoors. When a mobile radio base-station installed in each home of a condominium or residential areas is present nearby, there is a possibility that the coverage areas of the mobile radio base-stations overlap each other.

Fig. 2 depicts a state that, as a worst case, the mobile radio base-station 24 is installed within a range in which the coverage area 29 of the neighboring mobile radio base-station 25 and the coverage area 27 of the public radio base station 21 are redundantly present, in the state that the coverage area 29 of the mobile radio base-station 25 is partly redundant with the coverage area 27 of the public radio base station 21. A radio terminal 26 is shown within the coverage area 28 of the mobile radio base-station 24.

In the setting of a radio channel of the mobile radio base-station according to the present invention, giving interference to the public radio base station by the dynamic setting of a radio channel or forcing a change in the setting of a radio channel of the public radio base station should be avoided. This is because the convenience of the public cannot be decreased by the convenience of individual. Therefore, in the present invention, to separate the setting of a radio channel of the public radio base station from the setting of a radio channel of the mobile radio base-station for individuals, the frequency used by the public radio base station 21 is made different from the frequencies used by the mobile radio base-stations 24 and 25. In other words, the PPS 20 manages so that the frequencies used by the mobile radio base-stations are different from the frequency used by the neighboring public radio base station.

In this case, when a low frequency is assigned to a mobile radio base-station in the frequency band that can be used by the radio communication system, resistance to a layout change indoors can be improved by a wraparound effect of waves. However, when a frequency is reserved for the mobile radio base-station that is locally used during a short term, frequencies that can be used by the public radio base station decrease, and the frequency utilization efficiency decreases. Therefore, in the present invention, a frequency that cannot be used by a public radio base station is defined in each area in which the public radio base station is installed, and this frequency is assigned to a mobile radio base-station. In other words, a frequency that a mobile radio base-station can use is different for each area.

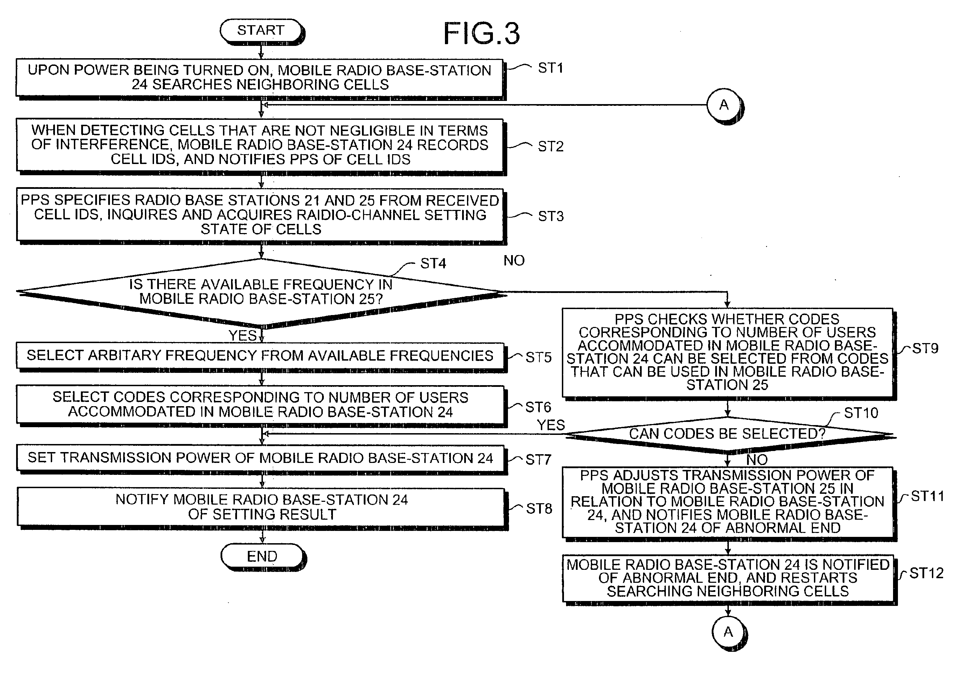

Fig. 3 is a flowchart for explaining a procedure in which the plug-and-play server shown in Fig. 2 sets a radio channel of a mobile radio base-station. Fig. 3 depicts the process of setting a radio channel of the mobile radio base-station 24 at the time of installing the mobile radio base-station 24 in the coverage area 29 of the neighboring mobile radio base-station 25 and the coverage area 27 of the public radio base station 21 as shown in Fig. 2. The setting of a radio channel of the mobile radio base-station 25 at the time of installing the mobile radio base-station 25 in the state that only the public radio base station 21 is in operation is also carried out in a similar procedure. Therefore, in Fig. 3, it is assumed that radio channels are set to the public radio base station 21 and the mobile radio base-station 25 to avoid mutual interferences.

In Fig. 3, at step ST1, when the power is turned on or reset operation is performed, the mobile radio base-station 24 searches adjacent cells for all frequencies that can be used in the radio communication system. The "all frequencies that can be used in the radio communication system" means frequencies that can be used in the mobile radio base-station and the public radio base station, respectively. The "cells" means logical radio terminal accommodation areas that are determined by the set of a part (sector) of the coverage area of the mobile radio base-station and the public radio base station partitioned by radio beam forming and frequencies used in this sector. For example, when the coverage area of a certain radio base station in the mobile radio base-station and the public radio base station is divided by each 60° into six sectors, and when four frequencies are used in each sector, one radio base station manages 6×4=24 cells. Therefore, in this embodiment, while the CDMA system is explained as an example, the "search for cells" also includes carrier sense that is executed in the PHS (Personal Handy-phone System) and the like.

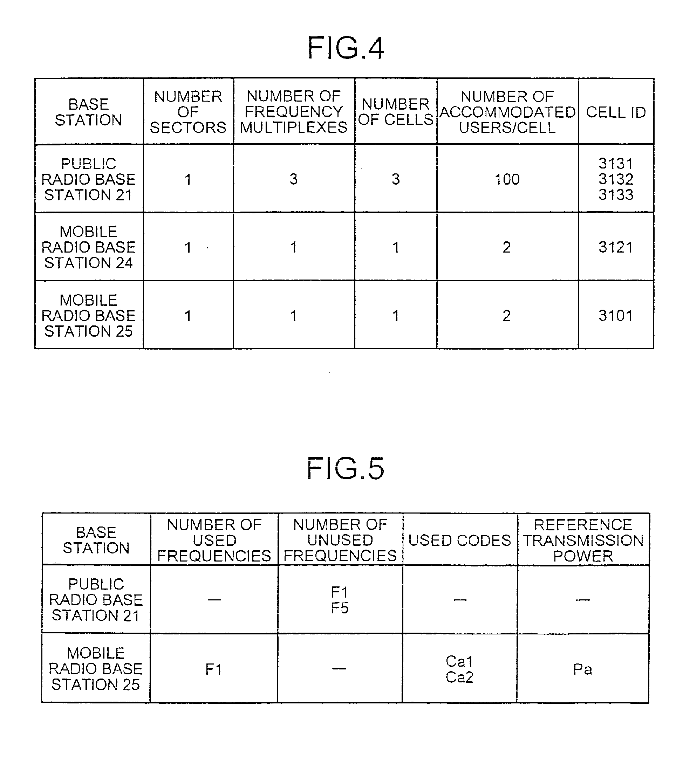

Fig. 4 is a table for explaining cell configurations of the radio base stations shown in Fig. 2. In the embodiment, to simplify the explanation, cells of the public radio base station 21 and the mobile radio base-stations 24 and 25 are configured as shown in Fig. 4, and other cells also have similar configurations. In Fig. 4, the table contains such items as the number of sectors, the number of frequency multiplexes, the number of cells, the number of accommodated users/cell, and cell ID. The cell ID is an identification symbol or the like that can uniquely identify cells out of cells of all radio base stations in the radio communication system. In the W-CDMA system, Cell identity that is notified by a broadcast channel can be used.

At the next step ST2, when having detected a cell of a power level that is not negligible in terms of interference as a result of cell search, the mobile radio base-station 24 records the ID of this cell. Assume that while cells corresponding to cell IDs "3131, 3133, and 3101" can be identified, cells corresponding to cell ID "3132" cannot be found in the "cell ID" column shown in Fig. 4. The mobile radio base-station 24 notifies, after confirming the connection to the HT 22, the PPS 20 of the IDs "3131, 3133, and 3101", which have been specified and recorded, via the Internet. When the mobile radio base-station 24 can determine that the cell ID "3131" and the cell ID "3133" indicates the cells covered by the same base station, the mobile radio base-station 24 can report one of the cell IDs "3131" and "3133", and the cell ID "3101".

At step ST3, the PPS 20 specifies the public radio base station 21 and the mobile radio base-station 25 based on the notified cell IDs, and inquires and acquires the radio-channel setting state of these cells. Fig. 5 a table for explaining radio-channel setting state in cells of the radio base stations detected by the mobile radio base-station for which a radio channel is to be set. In response to the inquiry from the PPS 20, the public radio base station 21 and the mobile radio base-station 25 notify the PPS 20 about the number of used frequencies, the number of unused frequencies, used codes, and reference transmission power, as shown in Fig. 5, for example.

It is clear from the content of notification (Fig. 5) that the frequency used by the mobile radio base-station 25 is F1, that used or reserved code numbers are Cal and Ca2, that transmission power of the reference channel (for example, a common pilot channel (CPICH) of the W-CDMA) is Pa, and that frequencies F1 and F5 are reserved for the mobile radio base-station around the public radio base station 21.

The PPS 20 determines a frequency, a code, and transmission power of a radio channel used in the mobile radio base-station 24, from the frequencies, used codes, and transmission power of the returned cells, in the order of step ST4 to ST12.

In other words, at step ST4, the PPS 20 does not use the frequency (F1) that is used by the mobile radio base-station 25 and the public radio base station, and searches an available frequency to be used by the mobile radio base-station 24 from the frequencies (F1 and F5) use of which is reserved for the mobile radio base-station.

When available frequencies are found as a result of the search (step ST4: Yes), the PPS 20 selects an arbitrary frequency from the available frequencies (step ST5). When a response as shown in Fig. 5 is obtained, the frequency F5 can be freely used, and the frequency F5 can be assigned to the mobile radio base-station 24. In this operation, orthogonality with other cell can be maintained in this frequency. Therefore, two codes as the maximum number of accommodated users that can be used in the mobile radio base-station 24 can be selected at random (step ST6). The PPS 20 sets transmission power of the mobile radio base-station 24 (step ST7), and notifies the mobile radio base-station 24 about a result of the setting via the Internet (step ST8). The PPS 20 can instruct the mobile radio base-station 24 about the selection of a code. Alternatively, the PPS 20 can instruct the mobile radio base-station 24 to select a code at random, and the mobile radio base-station 24 can select a code.

On the other hand, when no available frequency is found as a result of the search (step ST4: No), i.e., when the radio base stations 25 and 24 can use only the same frequency, the PPS 20 checks whether codes corresponding to the number of codes accommodated in the mobile radio base-station 24 can be selected out of codes that can be used in the mobile radio base-station 25 (step ST9).

In the example of Fig. 5, when the frequency F5 is used in the public radio base station and cannot be used in the mobile radio base-station, i.e., when the mobile radio base-stations 24 and 25 can use only the frequency F1, the PPS 20 checks whether codes corresponding to the number of accommodated users (the number of accommodated users is two, in this example) can be selected from codes not used by the mobile radio base-station 25.

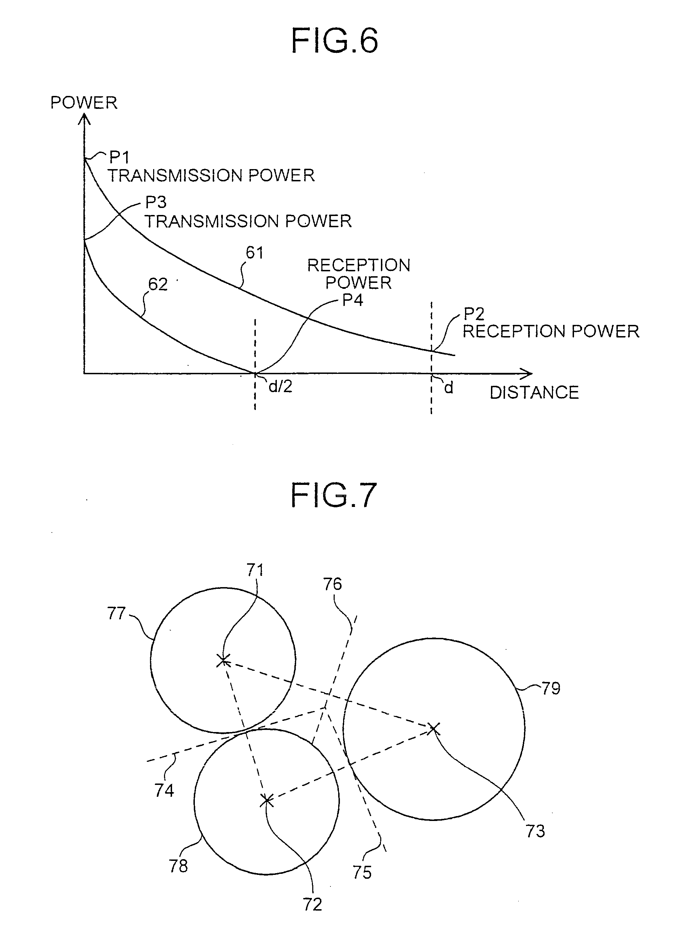

When the PPS 20 can select codes corresponding to the number of codes accommodated in the mobile radio base-station 24 (step ST10: Yes), the process proceeds to step ST7. When the number of usable codes is in short (step ST10: No), transmission power of the mobile radio base-station 25 is adjusted in relation to the neighboring mobile radio base-station (the mobile radio base-station 24, in the example of Fig. 2) in the method described later (Figs. 6 and 7), and the mobile radio base-station 24 is notified of abnormal end (step ST11). In this case, the mobile radio base-station 24 immediately or after a suitable interval restarts searching neighboring cells (step ST12), and performs process at step ST2. Because the transmission power of the neighboring mobile radio base-station (the mobile radio base-station 25, in the example of Fig. 2) is adjusted (step ST11), the mobile radio base-station 24 can be assigned a radio channel by retrial in many cases.

In other words, when the mobile radio stations use the same frequency and also use the same code, the transmission power of the mobile radio base-stations are adjusted to narrow the coverage areas of the respective mobile radio base-station. This can sometimes avoid causing mutual interference even if the same frequency and the same code are used. Specifically, transmission power of the mobile radio base-stations is adjusted to be approximately at the same level between neighboring two mobile radio base-stations. A power adjusting method is explained below with reference to Figs. 6 and 7. Fig. 6 is a chart for explaining the power adjusting operation of the plug-and-play server shown in Fig. 2. Fig. 7 is a schematic for explaining a result of power adjustment.

A relation between power in wave propagation and a propagation distance in a free space having no barriers, such as outdoor and indoor communications, can be modeled using a numerical expression. It is known that, in a free space, power is attenuated inversely proportional to a square of a propagation distance. When this relation is used, an approximate distance between a transmission-side mobile radio base-station and a receiving-side mobile radio base-station can be known from transmission power of a reference channel at the transmission-side mobile radio base-station and measured reception power of the reference channel in the receiving-side mobile radio base-station.

The PPS 20 first issues a notification instruction to the neighboring mobile radio base-station (the mobile radio base-station 25, in this example) of the mobile radio base-station that requests for a channel setting, and obtains transmission power of the reference channel. The PPS 20 obtains an approximate distance between the neighboring two mobile radio base-stations, from the obtained transmission power of the reference channel and measured reception power that the mobile radio base-station (the mobile radio base-station 24, in this example) of the mobile radio base-station which requests for a channel setting notifies at the request time. In Fig. 6, when the transmission power of the reference channel of the transmission-side mobile radio base-station is P1 and also when the reception power of the reference channel of the reception-side mobile radio base-station is P2, an attenuation characteristic is obtained as shown by a curve 61, by modeling the relationship between the wave propagation distance and the power attenuation. Therefore, a distance between the both mobile radio base-stations can be known as approximately d.

Next, the PPS 20 calculates transmission power P3 so that power is attenuated to a level equal to or lower than reception power P4 that is negligible in terms of interference, when the transmission-side mobile radio base-station 25 moves to a distance d/2 on the way to the mobile radio base-station 24. The PPS 20 controls the transmission power of the reference channel of the mobile radio base-station 25 so as not to exceed the value P3 from the relationship with the mobile radio base-station 24. In this case, because the mobile radio base-station 24 that requests for a channel setting also has a relationship with other neighboring mobile radio base-station, a retry is performed. When the mobile radio base-station 25 needs to readjust a relationship with another neighboring mobile radio base-station as a result of adjusting power in relation to the mobile radio base-station 24, the readjustment is performed in a similar procedure.

By performing the above power adjustment each time there is a request for a channel setting, overlapping of coverage areas of the mobile radio base-stations can be avoided, and interference can be avoided even if the same frequency and the same code are used as shown in Fig. 7.
In Fig. 7, reference numerals 71 to 73 denote disposition positions of mobile radio base-stations, and reference numerals 74 to 76 denote perpendicular bisectors that connect between positions of two mobile radio base-stations. Reference numerals 77 to 79 denote coverage areas of mobile radio base-stations that are obtained as a result of power control. The coverage areas 77 to 79 shown in Fig. 7 are determined as follows.

For example, when only the mobile radio base-station 71 and the mobile radio base-station 73 are present, transmission power of the mobile radio base-station 71 and transmission power of the mobile radio base-station 73 are determined so that power is sufficiently attenuated in a distance equal to or smaller than a half of the line length between the mobile radio base-station 71 and the mobile radio base-station 73. As a result, the area 77 covered by the mobile radio base-station 71 and the area 79 covered by the mobile radio base-station 72 are both limited in size to the extent of the bisector 76.

When the mobile radio base-station 72 is added in this situation, the area is limited in size to the extent defined by the bisector 74 between the mobile radio base-station 71 and the mobile radio base-station 72, and the area is limited in size to the extent defined by the bisector 75 between the mobile radio base-station 73 and the mobile radio base-station 72. When attention is focused on the mobile radio base-station 71, to avoid causing interference to the mobile radio base-station 73, transmission power needs to be controlled such that the coverage area 77 reaches the bisector 76. On the other hand, to avoid causing interference to the mobile radio base-station 72, transmission power needs to be controlled such that the coverage area 77 reaches the bisector 74.

In the transmission power control of the mobile radio base-station 71, to avoid causing interference to both the mobile radio base-station 72 and the mobile radio base-station 73, the coverage area is adjusted to match a smaller one of the distance between the mobile radio base-station 71 and the bisector 74 and the distance between the mobile radio base-station 71 and the bisector 76. As a result, the coverage area 77 of the mobile radio base-station 71 has a range that touches the bisector 74 and does not touch the bisector 76.

The coverage areas 78 and 79 of the mobile radio base-station 72 and the mobile radio base-station 73 are also obtained in a similar method. As shown in Fig. 7, the coverage area 78 of the mobile radio base-station 72 has a range that touches the bisector 74 and does not touch the bisector 75. The coverage area 79 of the mobile radio base-station 73 has a range that touches the bisector 75 and does not touch the bisector 76.

The above is the explanation of the operation performed when the mobile radio base-station 24 is started up anew, i.e., when the power is turned on or when reset operation is performed. Because the mobile radio base-station can be installed by an individual at home, there is a possibility that the power is turned off after the mobile radio base-station is started, or the mobile radio base-station is moved with the power kept on. Therefore, the PPS 20 needs to periodically monitor the state of the mobile radio base-station, and set an optimal radio channel each time.

For this purpose, the following two methods can be used: (1) the mobile radio base-station periodically, or during idling having no radio connection, executes the above operation sequence of the start up of the base station, thereby setting a radio channel; and (2) the PPS 20 holds a list of mobile radio base-stations that have requested a setting of a radio channel, and periodically checks whether the power to each of the mobile radio base-stations in the list is off, thereby updating a setting of a radio channel.

As explained above, according to the first embodiment, a frequency used by the public radio base station is separated from a frequency used by a mobile radio base-station that is used indoors. Therefore, an optimal radio channel can be set to the mobile radio base-station, without changing the setting of the radio channel of the public radio base station. In other words, the mobile radio base-station can be selectively moved to an indoor convenient position.

The mobile radio base-station uses a frequency that is not used by the public radio base station which is present around the mobile radio base-station. Therefore, a specific frequency band does not need to be reserved for a mobile radio base-station that is locally used in a short term, and high frequency-utilization efficiency can be maintained.

The mobile radio base-station that is to be assigned a radio channel monitors a transmission radio channel of a neighboring radio base station, and notifies the PPS. The PPS inquires the notified neighboring radio base station about a setting state of a radio channel. Therefore, the PPS does not need to understand the disposition relationship of a radio base station, and can set an optimal radio channel to match the mobile radio base-station.

In addition, after the mobile radio base-station is started up, the mobile radio base-station can be periodically monitored, and an optimal radio channel can be set each time. Therefore, the power of the mobile radio base-station can be freely turned off, and the mobile radio base-station can be moved with the power kept on.

### Second embodiment

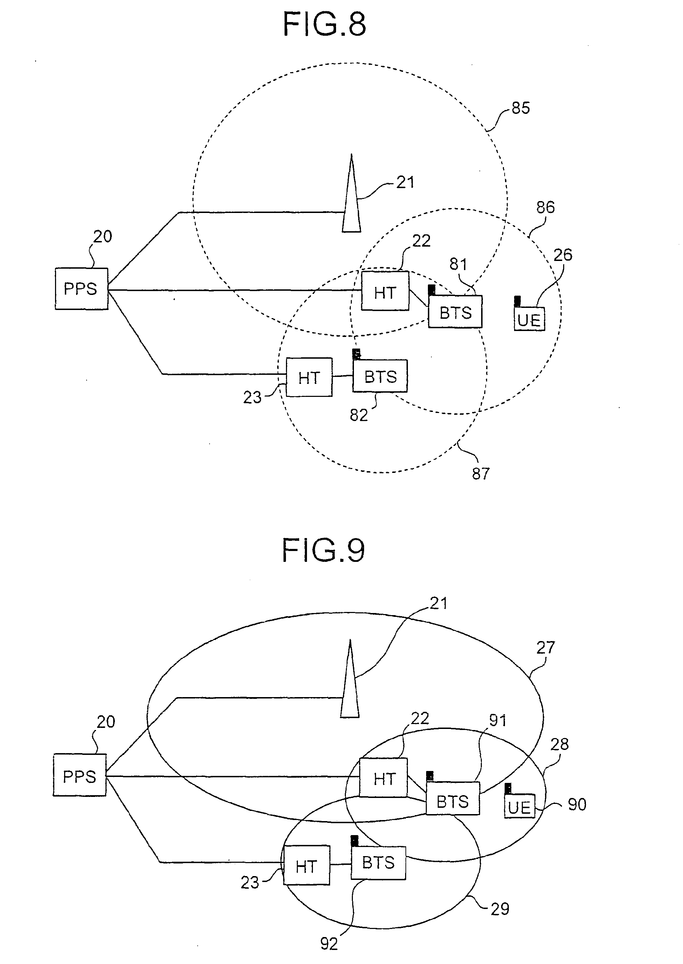

Fig. 8 is a conceptual diagram of a radio channel setting system for explaining a method of setting a radio channel of a mobile radio base-station according to a second embodiment of the present invention. In Fig. 8, constituent elements identical or equivalent to those shown in Fig. 2 (first embodiment) are designated by like reference numerals. Parts relevant to the second embodiment are mainly explained below.

In Fig. 8, the radio channel setting system according to the second embodiment includes mobile radio base-stations 81 and 82 in place of the mobile radio base-stations 24 and 25 in the configuration shown in Fig. 2 (first embodiment). The mobile radio base-stations 81 and 82 include a GPS receiving function of receiving a GPS wave by a global positioning system (GPS) and obtaining a current position (GPS position information) of the own base station, in addition to the functions of the mobile radio base-stations 24 and 25.

In Fig. 8, a circle 85 is a maximum reach range of a radio channel transmitted by the public radio base station 21. Circles 86 and 87 are maximum reach ranges of radio channels transmitted by the mobile radio base-stations 81 and 82. These maximum reach ranges of the radio channels are equal to a maximum cell radius of the radio base station, and are known information. A maximum cell radius of the mobile radio base-stations 81 and 82, i.e., the radius of the circles 86 and 87 is Rm, respectively. A maximum cell radius of the public radio base station 21, i.e., the radius of the circle 85 is Rp.

In short, in the second embodiment, a radio base station positioned near the mobile radio base-station that is assigned a radio channel is specified by GPS information. As in the first embodiment, an explanation is made of the operation when the mobile radio base-station 81 is started up anew in the state that the mobile radio base-station 82 and the public radio base station 21 are operated without mutual interference.

In Fig. 8, upon power being turning on or reset operation, the mobile radio base-station 81 calculates a current position (GPS position information) of the own base station by using the incorporated GPS receiver, and notifies the PPS 20 about this current position. The PPS 20 has already obtained position information of other radio base stations (the public radio base station and the mobile radio base-station). In other words, the GPS position information of the mobile radio base-station in operation is already obtained at the channel-setting time. Therefore, the PPS 20 searches a radio base station of which circle using a maximum cell radius as a radius around the position of the radio base station is overlapped with the circle 86 of the radius Rm around the current position of the mobile radio base-station 81. When such a radio current base station is found, a setting state of a radio channel can be inquired to this radio base station.

In the example shown in Fig. 8, the circle 87 of the radius Rm around the position of the mobile radio base-station 82 and the circle 85 of the radius Rp around the position of the public radio base station 21 are overlapped with the circle 86 of the radius Rm around the position of the mobile radio base-station 81.

The PPS 20 inquires the public radio base station 21 and the mobile radio base-station 82 about their setting states of radio channels. The mobile radio base-station 82 transmits the information shown in Fig. 4. Thereafter, frequencies and scrambling codes are assigned in the process explained in the first embodiment. In this case, in the adjustment of transmission power, the PPS 20 does not need to calculate a distance between mobile radio base-stations based on a difference between a transmission power value of the reference channel and a reception power value, and can directly calculate a distance from the GPS information notified from each mobile radio base-station.

As explained above, according to the second embodiment, a neighboring mobile radio base-station can be searched in high precision using GPS position information at the start up time of the mobile radio base-station, thereby setting an optimal radio channel.

### Third embodiment

Fig. 9 is a conceptual diagram of a radio channel setting system for explaining a method of setting a radio channel of a mobile radio base-station according to a third embodiment of the present invention. In Fig. 9, constituent elements identical or equivalent to those shown in Fig. 2 (first embodiment) are designated by like reference numerals. Parts relevant to the second embodiment are mainly explained below.

In Fig. 9, the radio channel setting system according to the third embodiment includes a radio terminal 90 in place of the radio terminal 26 in the configuration shown in Fig. 2 (first embodiment). Further, mobile radio base-stations 91 and 92 are provided in place of the mobile radio base-stations 24 and 25.

The radio terminal 90 and the mobile radio base-stations 91 and 92 include means that uses a radio communication system other than a radio communication system that is originally used, for example, a short-range communication unit such as infrared communication (IrDA) and Bluetooth.

The radio terminal 90 uses the originally-provided cell search function as a function of monitoring adjacent radio base stations (the public radio base station and the mobile radio base-stations). In this case, the mobile radio base-stations 91 and 92 display a signal indicating that the mobile radio base-stations 91 and 92 are waiting for a neighboring radio base station at the start up time, in a display unit (such as an LED and a liquid-crystal display panel).

When the radio terminal 90 has a GPS receiving function, the radio terminal 90 obtains a current position (GPS information) of the own terminal using the GPS receiving function, instead of monitoring an adjacent radio base station by the cell search. In this case, at the start up time, the mobile radio base-stations 91 and 92 can display a signal indicating that the mobile radio base-stations 91 and 92 are waiting for position information of the own radio base station, in a display unit (such as an LED and a liquid-crystal display panel), instead of the above display.

As in the first embodiment, an explanation is made of the operation when the mobile radio base-station 91 is started up anew in the state that the mobile radio base-station 92 and the public radio base station 21 are operated without mutual interference.

In Fig. 9, upon power being turning on or reset operation, the mobile radio base-station 91 waits, by displaying in the display unit a signal indicating that the mobile radio base-station 91 is waiting for information of a neighboring radio base station. Because the radio terminal is always searching cells, a cell ID of the radio base station can be obtained. When a user of the radio terminal 90 belonging to the mobile radio base-station 91 confirms the signal indicating that the mobile radio base-station 91 is waiting for information of a neighboring radio base station displayed by the mobile radio base-station 91, the user transfers the cell ID of the searched radio base station to the mobile radio base-station 91 by using a short-range communication unit. In this example, it is assumed that the cell IDs "3101, 3131, and 3133" are transferred to the mobile radio base-station 24 as in the first embodiment.

Further, in recent years, many radio terminals installed with GPS receiving devices appear, and provision of services using position information of radio terminals is started. Therefore, in the third embodiment, when a user of the radio terminal 90 belonging to the mobile radio base-station 91 has a GPS receiving device, the user can calculate GPS position information in place of a result of the cell search, and can notify the mobile radio base-station 91 about the GPS position using a short-range communication unit, upon confirming a signal indicating a waiting for information of a neighboring radio base station or a signal indicating a waiting for position information of the own radio base station.

The mobile radio base-station 91 transfers a cell ID of a neighboring radio base station received from the radio terminal 90 belonging to the mobile radio base-station 91, or GPS position information of the radio terminal 90 belonging to the mobile radio base-station 91, to the PPS 20.

As a result, the PPS 20 specifies the radio base stations 92 and 21 that are present near the mobile radio base-station 91, based on the cell ID of the radio base station or the GPS position information of the radio terminal 90, in the process similar to that of the first embodiment. The PPS 20 inquires these radio base stations about setting states of radio channels, and determines a radio channel of the mobile radio base-station 91.

As described above, according to the third embodiment, cell search information that a radio terminal usually searches is used as information of a radio base station near the mobile radio base-station. Therefore, the mobile radio base-station does not need to have the cell search function, and the mobile radio base-station can be made compact.

A position of the own radio terminal is calculated by using the GPS receiving function held by the radio terminal, and this position is notified to the mobile radio base-station. Therefore, the mobile radio base-station does not need to have the GPS receiving function, and the mobile radio base-station can be made compact.

### INDUSTRIAL APPLICABILITY

As explained above, the method of setting a radio channel of a mobile radio base-station according to the present invention is useful in using a base station while changing the location of the base station to a desired position in a radio communication system established in a limited area or indoors.

## Claims

1. A method of setting a radio channel of a mobile radio base-station that is applied to a radio communication system established in a limited area or indoors, the radio communication system including the mobile radio base-station that is movably installed, and includes an IP communication interface to access an IP communication network in addition to a radio resource control function, and a plug-and-play server that manages a public radio base station of a mobile telephone network and the mobile radio base-station and is located on an operator network connected to the IP communication network, the method comprising:
a first step at which the mobile radio base-station, in which power is turned on or reset operation is performed, notifies the plug-and-play server about position information of a neighboring radio base station; and
a second step at which the plug-and-play server inquires the neighboring radio base station specified based on the position information about radio-channel setting state to acquire the radio-channel setting state, and sets a radio channel of the mobile radio base-station that has notified the plug-and-play server of the position information by any one of frequency assignment and code assignment based on radio-channel setting state of a mobile radio base-station out of obtained radio-channel setting state of the neighboring radio base station.

2. The method of setting a radio channel of a mobile radio base-station according to claim 1, comprising a third step at which the plug-and-play server updates a setting of a radio channel upon receiving a notification of position information of a neighboring radio base station from each mobile radio base-station in operation.

3. The method of setting a radio channel of a mobile radio base-station according to claim 1, comprising a third step at which the plug-and-play server updates a setting of a radio channel, by inquiring each mobile radio base-station in operation about position information of a neighboring radio base station, and obtaining the position information.

4. The method of setting a radio channel of a mobile radio base-station according to claim 1, wherein the first step includes a step at which a mobile radio base-station carries out a cell search when power is turned on or reset operation is carried out, and notifies the plug-and-play server about a cell ID of a found neighboring radio base station as the position information.

5. The method of setting a radio channel of a mobile radio base-station according to claim 1, wherein the first step includes: a step at which a mobile radio base-station displays a signal indicating a waiting for information of neighboring radio base stations, when the power is turned on or reset operation is carried out; a step at which a radio terminal that moves within the radio communication system transmits a cell ID of a radio base station adjacent to the mobile radio base-station found by carrying out a cell search in the coverage area of the mobile radio base-station in which the radio terminal moving within the radio communication system is displaying the waiting, to the mobile radio base-station using a radio communication system according to a user operation other than a radio communication system used in communications with the mobile radio base-station; and a step at which the mobile radio base-station that displays the waiting notifies the plug-and-play server about the cell ID of the neighboring radio base station received from the radio terminal as the position information.

6. The method of setting a radio channel of a mobile radio base-station according to claim 1, wherein at the second step, the plug-and-play server assigns a frequency not used by the peripheral public radio base station to the mobile radio base-station.

7. The method of setting a radio channel of a mobile radio base-station according to claim 1, wherein the second step includes: a step at which the plug-and-play serer executes the first step again to a mobile radio base-station to which the position information is notified, when interference with the mobile radio base-station to which the position information is notified cannot be avoided by assigning a frequency or assigning a code; and a step at which the plug-and-play server makes an adjacent mobile radio base-station that a mobile radio base-station to which the position information is notified searches calculate a distance between two mobile radio base-stations by considering attenuation from a difference between transmission power obtained by requesting a notification of transmission power of a reference channel and measured reception power obtained from a mobile radio base-station to which the position information is notified, and adjust transmission power so that a cell radius of an arbitrary mobile radio base-station becomes equal to or smaller than a half of a distance to the adjacent mobile radio base-station.

8. A method of setting a radio channel of a mobile radio base-station, comprising:
a first step at which a mobile radio base-station to which power is turned on or reset operation is carried out notifies a plug-and-play server about position information of the own radio base station; and
a second step at which the plug-and-play server inquires a neighboring radio base station specified based on the notified position information about a setting state of radio channels, thereby obtaining the setting states, and sets a radio channel of a mobile radio base-station to which the position information is notified, by assigning a frequency or assigning a code based on a setting state of a radio channel of a mobile radio base-station in the neighboring radio base station out of the obtained setting state of radio channels,
in the mobile radio base-station that is movably installed, including an IP communication interface that communicates with an IP communication network in addition to a radio resource control function in a radio communication system built in a limited area or indoors, wherein the plug-and-play server that manages a public radio base station of a mobile telephone network and the mobile radio base-station on an operator network connected to the IP communication network.

9. The method of setting a radio channel of a mobile radio base-station according to claim 8, comprising a third step at which the plug-and-play server updates a setting of a radio channel upon receiving a notification of position information of the own radio base station from each mobile radio base-station in operation.

10. The method of setting a radio channel of a mobile radio base-station according to claim 8, comprising a third step at which the plug-and-play server updates a setting of a radio channel, by inquiring each mobile radio base-station in operation about position information of the own radio base station, and obtaining the position information.

11. The method of setting a radio channel of a mobile radio base-station according to claim 8, wherein the first step includes a step at which a mobile radio base-station calculates a current position of the own radio base station using a GPS receiving function when power is turned on or reset operation is carried out, and notifies the plug-and-play server about the calculated current position of the own radio base station as the position information.

12. The method of setting a radio channel of a mobile radio base-station according to claim 8, wherein the first step includes: a step at which a mobile radio base-station displays a signal indicating a waiting for information of the own radio base station, when power is turned on or reset operation is carried out; a step at which a radio terminal that moves within the radio communication system calculates a current position of the own radio terminal using a GPS receiving function in the coverage area of the mobile radio base-station in which the radio terminal moving within the radio communication system is displaying the waiting, and transmits the calculated current position of the own radio terminal to the mobile radio base-station using a radio communication system according to a user operation other than a radio communication system used in communications with the mobile radio base-station; and a step at which the mobile radio base-station that displays the waiting notifies the plug-and-play server about the current position of the radio terminal that the mobile radio base-station displaying the waiting receives from the radio terminal, as the position information.

13. The method of setting a radio channel of a mobile radio base-station according to claim 8, wherein the second step includes: a step at which the plug-and-play serer executes the first step again to a mobile radio base-station to which the position information is notified, when interference with the mobile radio base-station to which the position information is notified cannot be avoided by assigning a frequency or assigning a code; and a step at which the plug-and-play server makes a mobile radio base-station other than a mobile radio base-station that notifies the position information calculate a distance between two mobile radio base-stations from position information using a GPS receiving function of the own radio base station obtained at the channel-setting time and position information obtained from a mobile radio base-station to which the position information is notified, and adjust transmission power so that a cell radius of an arbitrary mobile radio base-station becomes equal to or smaller than a half of a distance to the adjacent mobile radio base-station.
